# DEMANDE DE BREVET EUROPEEN

(11) **EP 1 280 057 A1**
(43) Date de publication de la demande: **29.01.2003**
(21) Numéro de dépôt: 01402030.9
(22) Date de dépôt: 26.07.2001
(51) Int. Cl.: G06F 9/445

(54) **Procédé d'adaptation dynamique d'une application informatique**

(71) Demandeur: UNIVERSITE PIERRE ET MARIE CURIE, 75252 Paris Cédex 05 (FR)
(72) Inventeur: Folliot, Bertil, 75116 Paris (FR); Piumarta, Ian, 78000 Versailles (FR)
(74) Mandataire: Wagret, Frédéric

(57) **Abrégé**

La présente invention concerne un procédé d'adaptation d'au moins une application informatique à une configuration matérielle donnée d'une machine et / ou à des conditions d'utilisation particulières de ladite machine, caractérisé en ce qu'il comporte les étapes de :
- Chargement (10) d'un lecteur de code dans la machine ;
- Rédaction (20) d'un code de modification dépendant de l'application informatique ainsi que de la configuration matérielle donnée et / ou des conditions d'utilisation particulières ;
- Chargement (30) dudit code de modification dans la machine ;
- Configuration (40) de ladite machine d'après le code de modification chargé.

## Description

La présente invention concerne un procédé d'adaptation dynamique d'une application informatique selon le matériel sur lequel ladite application est chargée et / ou selon les besoins particuliers, les utilisations matérielles et services de l'utilisateur final.

Une application informatique écrite dans un langage évolué existe sous forme de code source indépendant des périphériques matériels et logiciels ainsi que de la machine qui l'exécutera ultérieurement. Afin d'être exécuté par une machine, le code source de l'application informatique doit être compilé, c'est-à-dire traduit et transformé en un code objet compréhensible par le matériel, puis lié afin d'être rendu exécutable par la machine hôte qui le reçoit.

Selon l'art antérieur, le compilateur et le lieur sont séparés des applications informatiques. Une fois compilée et liée, une application informatique est donc figée.

Certes, des possibilités de modification de l'application existent, par l'intermédiaire du chargement de bibliothèques dynamiques, mais ces possibilités sont très restreintes puisque les bibliothèques sont elles-mêmes figées, ou leur chargement nécessite des droits particuliers.

Ainsi, l'utilisateur ne peut modifier ladite application informatique en vue de répondre à des besoins particuliers, et ce à tout moment.

De plus, en cas d'évolution d'un matériel tel qu'un composant particulier, les applications faisant appel audit matériel ne peuvent pas forcément exploiter l'ensemble des ressources du matériel si cela n'a pas été prévu très en amont, lors de la conception desdites applications.

Une application informatique traditionnelle ne peut donc exploiter un matériel entièrement nouveau ou mettant en oeuvre une technologie nouvelle.

De même, il est intéressant de pouvoir assurer la portabilité des applications informatiques, c'est-à-dire de pouvoir faire fonctionner une application quel que soit le matériel (machine, système d'exploitation...) sur lequel ladite application est chargée.

On connaît des procédés permettant de générer une machine virtuelle en fonction de certains critères souhaités tels que les performances, la taille du code, etc.

Cependant, de tels procédés mettent eu oeuvre des machines virtuelles spécialisables qui ne sont pas ou peu extensibles.

D'autres procédés prévoient la modification d'un système d'exploitation complet modifiant les fonctionnalités ou les interfaces, mais ne permettent pas la modification ponctuelle et à la demande d'une application particulière.

Dans ce contexte, la présente invention pallie les inconvénients de l'art antérieur en proposant un procédé d'adaptation dynamique d'une application informatique selon le matériel employé ou les besoins particuliers d'un utilisateur.

A cette fin, selon l'invention, le procédé d'adaptation d'au moins une application informatique à une configuration matérielle donnée d'une machine et / ou à des conditions d'utilisation particulières de ladite machine, est caractérisé en ce qu'il comporte les étapes de :
- Chargement d'un lecteur de code dans la machine ;
- Rédaction d'un code de modification dépendant de l'application informatique ainsi que de la configuration matérielle donnée et / ou des conditions d'utilisation particulières ;
- Chargement dudit code de modification dans la machine ;
- Configuration de ladite machine d'après le code de modification chargé.

De préférence, le lecteur de code est chargé dans le code de l'application informatique à adapter, ledit lecteur de code comportant un compilateur ainsi qu'un lieur.

Avantageusement, l'étape de chargement du code de modification comporte les étapes de :
- lecture du code de modification par le lecteur ;
- compilation du code de modification ;
- exécution dudit code de modification.

Selon une forme préférée de réalisation, l'étape de configuration comprend une étape de définition de l'adaptation souhaitée de l'application informatique, le procédé compo gant un outre une étape de mise à jour incrémentale de la configuration.

Selon une forme particulière de réalisation, le procédé comporte en outre une étape de vérification de la configuration ainsi qu'une étape de déchargement du code de modification comprenant la suppression dudit code par la machine.

L'invention sera mieux comprise à la lumière de la description qui suit, se rapportant à des exemples de réalisation illustratifs et en aucun cas limitatifs, en référence aux figures annexées dans lesquelles :
- La figure 1 représente, schématiquement, la structure d'une application informatique avant son adaptation par le procédé de l'invention ;
- La figure 2 est un diagramme bloc représentant les étapes du procédé selon l'invention ;
- La figure 3 représente schématiquement la structure de l'application informatique de la figure 1 une fois modifiée par le procédé de l'invention.

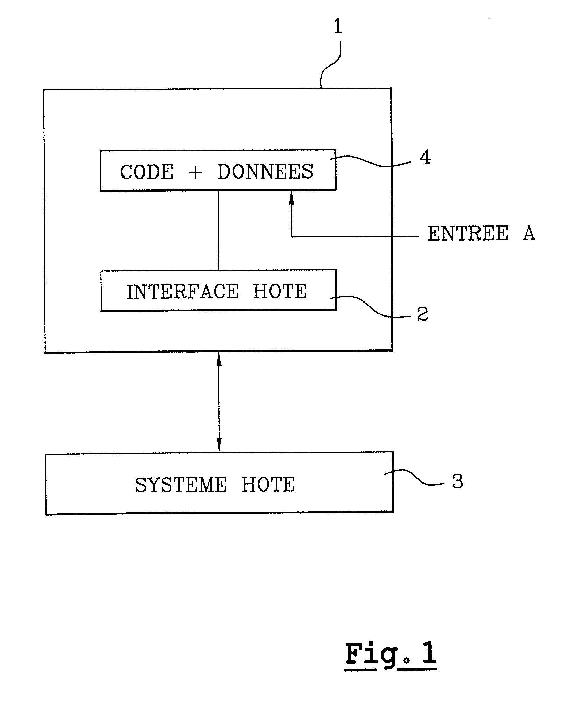

La figure 1 est une représentation schématique de la structure d'une application informatique avant son adaptation par le procédé de l'invention.

Plus particulièrement, la figure 1 représente schématiquement la structure d'une machine, de type ordinateur par exemple, sur laquelle est chargée l'application informatique destinée à être adaptée selon une configuration donnée de ladite machine ou selon une utilisation particulière de l'application.

De manière connue, la machine - comprend une mémoire centrale comportant une zone dite mémoire applicative 1 dans laquelle est chargée l'application informatique à adapter.

La mémoire applicative 1 comprend une interface hôte 2 permettant à l'application informatique de dialoguer avec le système hôte 3 de la machine.

De manière connue également, l'ensemble prévoit une entrée A destinée à charger des données telles que des bibliothèques dynamiques, des binaires, ou à communiquer vers l'extérieur, etc.

L'application informatique schématisée comporte donc un ensemble 4 constitué d'un code ainsi que de données destinés à être compilés par le compilateur de la machine, afin que cette dernière puisse exécuter l'application informatique.

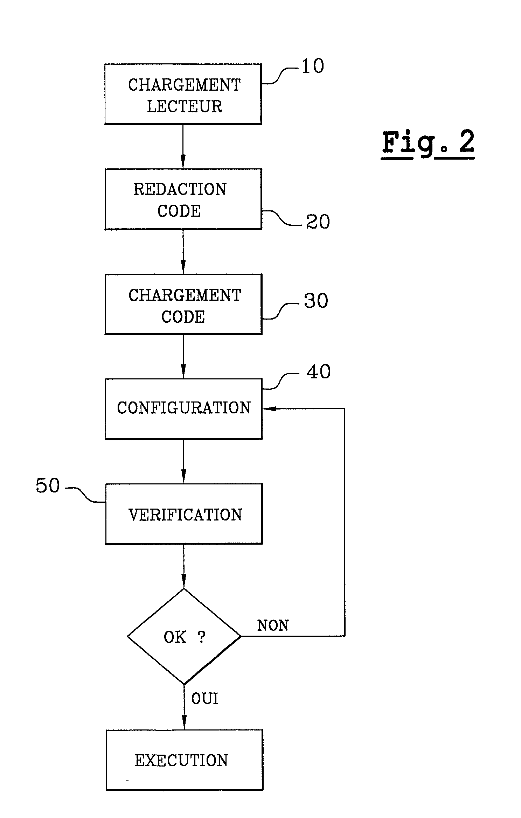

Les étapes d'une forme de réalisation du procédé d'adaptation d'une application informatique selon l'invention sont représentées sur le diagramme de la figure 2.

Le procédé de l'invention est mis en oeuvre lorsque l'utilisateur d'une machine souhaite adapter une application informatique à la configuration matérielle de ladite machine et / ou à des conditions particulières d'utilisation de la machine ou de l'application.

Tout d'abord, selon l'étape 10 du procédé, un lecteur de code particulier doit être chargé dans la machine, à l'emplacement ad hoc. Cet emplacement dépend de l'adaptation à réaliser.

En effet, si l'utilisateur souhaite modifier une seule application, le lecteur de code est chargé dans le code même de ladite application. Si l'utilisateur désire modifier une gamme plus large d'applications ou d'éléments s 'exécutant dans la machine, alors le lecteur de code doit être chargé au niveau du système d'exploitation.

Le chargement du lecteur peut être effectué par chargement dans une entrée prévue à cet effet par l'application, par l'intermédiaire d'une coquille vide de logiciel, par recompilation de l'application (selon les droits de licence), etc.

Dans le cas d'une insertion dans l'application informatique de la figure 1, le lecteur est chargé à travers l'entrée A prévue par l'application et servant au chargement de données.

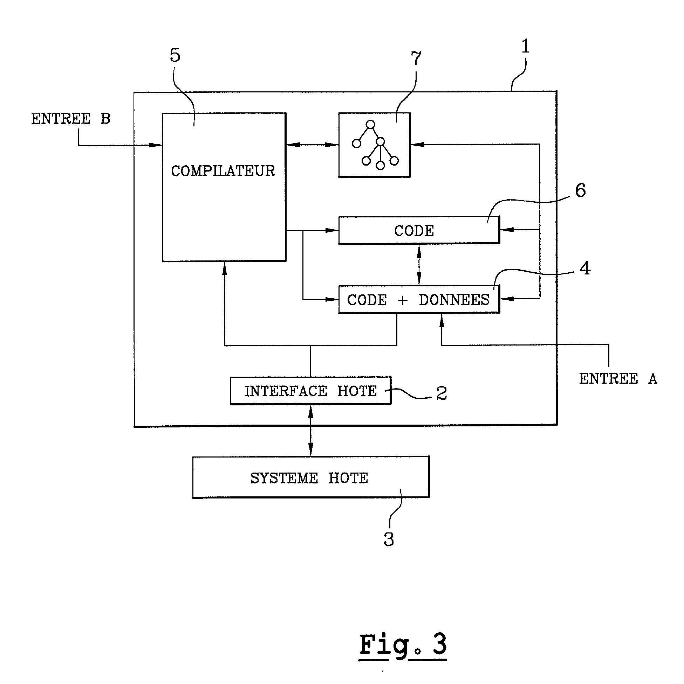

La figure 3 est une illustration schématique des modifications structurelles subies par l'application informatique à la suite du chargement du lecteur dans le code de ladite application.

Le chargement, à travers l'entrée A de l'application, du lecteur de code, permet de générer une autre entrée B destinée à charger, au niveau de la mémoire applicative 1, des entrées structurées telles que du code sortant d'un analyseur syntaxique et apte à être lu par le lecteur.

Ce chargement du lecteur permet, en outre, l'intégration d'un compilateur associé à un lieur (ci-après dénommé compilateur-lieur 5) au sein même de ladite application informatique, par opposition au dispositif classique rejetant le compilateur et le lieur à l'extérieur de l'application informatique.

Le compilateur-lieur 5 génère, à partir des données provenant de l'entrée B ainsi qu'éventuellement du code et des données applicatifs 4 provenant de l'entrée A, un code natif exécutable 6 respectant la même interface binaire que tous les composants systèmes, librairies, et applications de la machine cible.

Le compilateur-lieur 5 permet ainsi d'obtenir un code exécutable 6 contenant à la fois l'application informatique en question et le compilateur-lieur 5 lui-même, ledit code exécutable 6 étant compatible avec les conventions de code natif du système hôte 3.

Une structure de données 7 est utilisée par le compilateur-lieur 5 pour ranger des informations sur les diverses constructions des sources dudit compilateur-lieur 5.

Les différentes informations contenues dans la structure de données 7, semblable à la table de symboles d'un compilateur de l'art antérieur, sont collectées durant les phases d'analyse du compilateur et utilisées durant les phases de synthèse pour engendrer le code natif exécutable 6.

La structure de données 7 correspond donc à des méta-données persistantes décrivant l'état courant de la combinaison entre l'application informatique à adapter et le compilateur-lieur 5.

Le compilateur-lieur 5 comporte également, de manière connue, un chargeur afin de rendre exécutable le code natif 6 issu dudit compilateur-lieur 5.

En liaison à nouveau avec la figure 2, l'étape 20 du procédé consiste en la rédaction d'un code de modification selon l'adaptation de l'application qui doit être réalisée.

Ce code de modification dépend donc de critères dictés par la configuration matérielle et / ou l'utilisation particulière souhaitée de l'application informatique.

Lors de l'étape 30, ledit code de modification est ensuite chargé au niveau de la mémoire applicative de la machine, par l'intermédiaire de l'entrée B générée lors du chargement du lecteur.

Lors du chargement du code de modification, le lecteur lit ledit code de modification qui est ensuite compilé par le compilateur-lieur 5 avant d'être exécuté.

Selon l'étape suivante 40, l'ensemble est ensuite configuré (par l'utilisateur ou par un administrateur), la configuration devant respectée les critères observés lors de la rédaction du code de l'étape 20.

En effet, durant cette étape de configuration, l'utilisateur définit ses propres critères, choisis parmi ceux rendus possibles par la rédaction et le chargement du code de modification.

Une étape optionnelle 50 consiste en la vérification de la configuration, c'est-à-dire en la vérification d'une part que l'application informatique a bien été modifiée afin de répondre aux critères définis lors de l'étape 20 de rédaction du code de modification, et d'autre part que la ou les adaptations souhaitées sont réalisables.

Il existe donc une vérification automatique de la faisabilité des modifications, et une vérification manuelle de l'adéquation entre les souhaits de l'utilisateur exprimés à travers la rédaction du code de modification et l'adaptation effective de l'application.

Dans le cas où l'étape de vérification 50 entraîne un résultat négatif, le procédé selon l'invention prévoit un retour à l'étape 40 afin de changer la configuration.

Dans le cas où le résultat de la vérification de l'étape 50 est positif, l'application informatique a bien été adaptée aux conditions de fonctionnement définies lors de la réaction du code de modification (étape 20) et de la configuration (étape 40).

Dès lors, l'application informatique fonctionne selon les critères particuliers définis précédemment.

A tout moment, la configuration définie lors de l'étape 40 peut être modifiée pour être adaptée à des conditions différentes de fonctionnement.

Selon une forme particulière de réalisation de l'invention, le code peut également être ultérieurement déchargé dans le cas notamment où l'utilisation particulière de l'application informatique n'a plus lieu d'être ou d'un retour à une situation antérieure de la configuration matérielle de la machine.

L'étape de déchargement du code peut consister, par exemple, en une suppression du code de modification par la machine.

Le procédé d'adaptation d'une application informatique selon l'invention repose sur l'automodification dynamique du code de ladite application, et peut être appliqué à différents domaines tels que ceux définis dans les exemples ci-dessous.

### Exemple 1 :

Dans le cas d'un traitement de texte, l'application informatique permet d'afficher en sortie sur un écran des lettres et des symboles à partir des touches d'un clavier.

L'automodification dynamique de code logiciel selon l'invention peut prévoir, par exemple, dans le cas d'une machine utilisée par un malvoyant, le grossissement systématique selon un rapport déterminé des lettres entrées au clavier.

Ainsi, après que le lecteur du code de modification ait été chargé, on rédige ledit code de modification, fonction de la machine, de l'application de traitement de texte ainsi que de la nature de l'adaptation à effectuer.

Le code peut ainsi prévoir par exemple de grossir, selon un rapport à définir, la police de tout document ouvert par l'application.

Le code de modification est ensuite chargé dans l'application par l'intermédiaire de l'entrée B générée lors du chargement du lecteur.

Le procédé selon l'invention peut prévoir, avantageusement, une étape d'autoconfiguration du lecteur en fonction du matériel et / ou de l'application où il est chargé.

Cette étape d'autoconfiguration permet, dans le cas du traitement de texte de l'exemple, de configurer l'application afin de permettre à l'utilisateur de modifier la taille des polices selon une certaine plage.

L'utilisateur de l'application de traitement de texte choisit ensuite selon ses préférences les modifications à apporter. Ces modifications peuvent prévoir par exemple d'ajouter quatre points à toutes les polices d'un document, quelles soient ces polices.

Lors de l'étape de vérification optionnelle 50, l'utilisateur peut vérifier que le résultat obtenu correspond bien à la configuration définie précédemment (à savoir que les polices sont bien toutes augmentées de quatre points) et le procédé vérifie, mais automatiquement, qu'une fois agrandies, les polices respectent toujours les contraintes de fonctionnement du système, notamment en termes d'affichage.
De manière similaire, le procédé selon l'invention peut également prévoir la modification automatique de la taille des polices lors de l'impression de documents destinés aux malvoyants.

### Exemple 2 :

Le procédé selon l'invention permet également, de manière aisée, d'adapter dynamiquement une application informatique destinée à fonctionner sur des plates-formes matérielles et / ou logicielles différentes.

Ainsi, il n'est pas nécessaire de modifier ladite application informatique lors de sa conception dans le but de prévoir les différents supports d'exécution destinés à la recevoir.

Le procédé est particulièrement avantageux dans le cas de logiciels de jeux appelés à fonctionner sur différents supports de nature différente, puisque l'automodification dynamique selon l'invention permet ainsi la rédaction d'une seule version de l'application informatique qui sera ensuite adaptée dynamiquement aux différents supports d'exécution.

Le procédé selon l'invention permet également de modifier dynamiquement une application afin de l'adapter à différentes configurations matérielles, permettant un passage aisé d'un ordinateur à un autre ordinateur ou encore à un téléphone mobile, etc.

Le procédé d'adaptation dynamique de codes logiciels est également applicable dans le domaine de la protection du droit d'auteur, du télépaiement, ou encore de la synchronisation répartie, etc.

## Revendications

1. Procédé d'adaptation d'au moins une application informatique à une configuration matérielle donnée d'une machine et / ou à des conditions d'utilisation particulières de ladite machine, **caractérisé en ce qu'**il comporte les étapes de
- Chargement (10) d'un lecteur de code dans la machine ;
- Rédaction (20) d'un code de modification dépendant de l'application informatique ainsi que de la configuration matérielle donnée et / ou des conditions d'utilisation particulières ;
- Chargement (30) dudit code de modification dans la machine ;
- Configuration (40) de ladite machine d'après le code de modification chargé.

2. Procédé selon la revendication 1, **caractérisé en ce que** le lecteur de code est chargé dans le code de l'application informatique à adapter.

3. Procédé selon la revendication 1 ou 2, **caractérisé en ce que** le lecteur de code comporte un compilateur ainsi qu'un lieur (5).

4. Procédé selon l'une des revendications précédentes, **caractérisé en ce que** l'étape de chargement (30) du code de modification comporte les étapes de :
- lecture du code de modification par le lecteur ;
- compilation du code de modification ;
- exécution dudit code de modification.

5. Procédé selon l'une des revendications précédentes, **caractérisé en ce que** l'étape de configuration (40) comprend une étape de définition de l'adaptation souhaitée de l'application informatique.

6. Procédé selon l'une des revendications précédentes, **caractérisé en ce qu'**il comporte un outre une étape de mise à jour incrémentale de la configuration.

7. Procédé selon l'une des revendications précédentes, **caractérisé en ce qu'**il comporte en outre une étape de vérification (50) de la configuration.

8. Procédé selon l'une des revendications précédentes, **caractérisé en ce qu'**il comporte un outre une étape de déchargement du code de modification.

9. Procédé selon la revendication précédente, **caractérisé en ce que** l'étape de déchargement comporte une étape de suppression du code de modification par la machine.
